Europäisches Patentamt

European Patent Office

Office européen des brevets

(19)

(11) **EP 1 659 751 A2**

(12) **EUROPEAN PATENT APPLICATION**

(43) Date of publication:
**24.05.2006 Bulletin 2006/21**

(51) Int Cl.:
**H04L 27/26** (2006.01)

(21) Application number: **05251781.0**

(22) Date of filing: **23.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **22.11.2004 JP 2004337889**

(71) Applicant: **FUJITSU LIMITED**
**Kawasaki-shi,**
**Kanagawa 211-8588 (JP)**

(72) Inventor: **Satou, Tadahiro,**
**c/o Fujitsu Limited**
**Kawasaki-shi**
**Kanagawa 211-8588 (JP)**

(74) Representative: **Hitching, Peter Matthew et al**
**HASELTINE LAKE**
**Imperial House**
**15-19 Kingsway**
**London WC2B 6UD (GB)**

(54) **OFDM Wireless receiver**

(57)     A heterodyne receiver converts a received high frequency signal into an intermediate frequency signal and demodulates a base band signal from a intermediate frequency signal. Low-pass filters (57a, 57b) cut the high frequency components of the baseband signal, and AD converters (58a, 58b) sample the output signal of those low-pass filters, convert them to a digital signal and input them to a Fourier transformer (59). An intermediate frequency determining part (60) determines the intermediate frequency so that the spectrum when the intermediate frequency signal being inputted to the AD converter is under-sampled appears within a subcarrier band not used in OFDM transmission.

*FIG. 1*

**Description**

BACKGROUND OF THE INVENTION

The present invention relates to an OFDM wireless receiver and more particularly to an OFDM wireless receiver which prevents degradation of reception quality by determining an intermediate frequency such that the results of under-sampling of the intermediate frequency signal are folded back into a subcarrier band which is not used in OFDM communication.

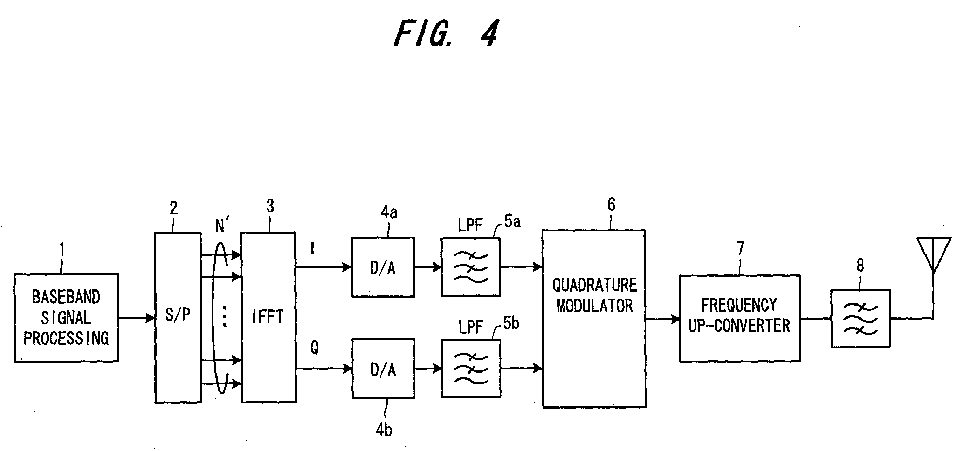

Fig. 4 is an example of configuration of an OFDM (Orthogonal Frequency Division Multiplex) transmission device.

A baseband signal processing part 1 executes baseband signal processing such as adding error correction/detection codes to the signal to be transmitted, interleaving, multilevel modulation and code spreading. A serial/parallel converting device (S/P convertor) 2 converts the processing results (transmission data) of the baseband signal processing part 1 into N complex components, an IFFT part (inverse fast Fourier transform device) 3, performing IFFT processing of the N complex components as N subcarrier components, transforms them into a real number part discrete time signal I(t) and an imaginary number part discrete time signal Q(t) and outputs them. If N is the FFT (fast Fourier transform) size, each subcarrier of the IFFT part 3 becomes a complex sine wave with a frequency of an integer multiple of a base frequency of 1/N of the FFT sampling frequency fs where the integer is 1, 2,... N. fs is the FFT sampling frequency and is also the sampling frequency of the AD converter described later. The IFFT part 3, by summing all the complex sine wave signals generated by these N subcarriers, outputs the real number part discrete time signal I(t) and the imaginary number part discrete time signal Q(t).

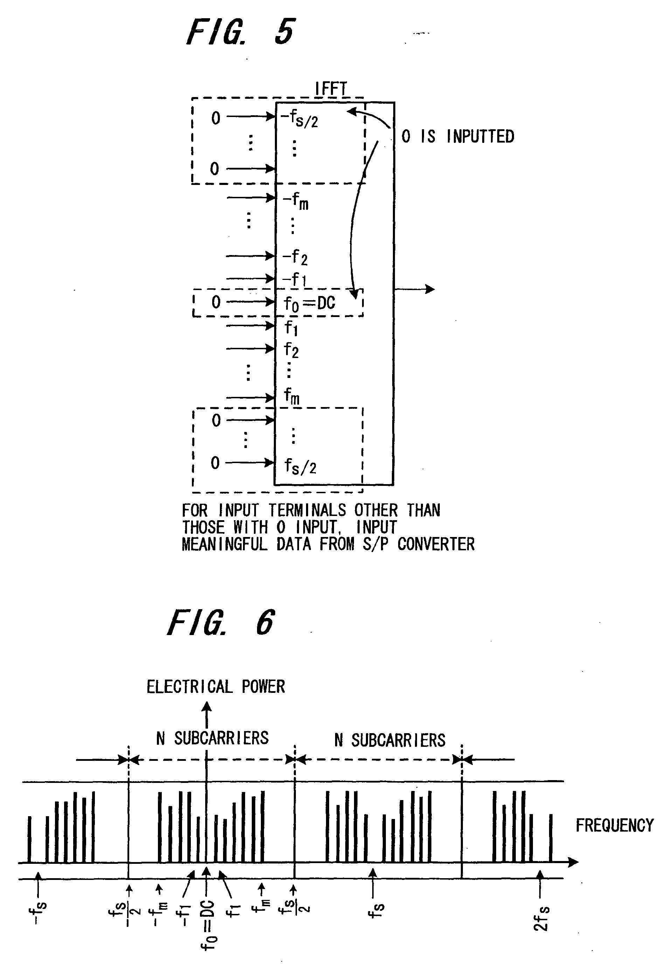

Actuality, as shown in Fig. 5, in OFDM transmission, the number N'of subcarriers (=the number of terminals for which 0 is not inputted) is made to be fewer than FFT size N. In other words, by not using subcarrier $f_o$ which corresponds to the direct current component and subcarriers near -fs/2 or +fs/2, reliability is improved and the processing of RF transmission signals becomes easier. Fig. 6 is the frequency spectrum in a case where the subcarriers are selected and used as shown in Fig. 5.

Digital-to-analog converters (DA converters) 4a and 4b perform DA conversion and convert the discrete time signals I(t) and Q(t), which were IFFT processed, into analog electric signals. Due to the nature of the IFFT or DA conversion processing, higher harmonic components are included in the analog baseband signals obtained by the above processing. As a result, low-pass filters (LFPs) 5a and 5b perform band limiting, extract analog baseband signals of the desired band and output them to an quadrature modulator 6. The quadrature modulator 6 executes an quadrature modulation by multiplying the real number part I(t) and imaginary number part Q(t) by the intermediate frequency sine waves and cosine waves generated from a local oscillator (not shown in the figure). Then they are frequency converted into RF frequency signals by a frequency up-converter 7, and after a band pass filter (BPF) 8 removes image components and unnecessary waves, such as spurious ones, occurring in the analog MIX (quadrature modulation and frequency conversion), they pass through a high-frequency amplifier and the like, not shown in the figures, and are transmitted from the antenna.

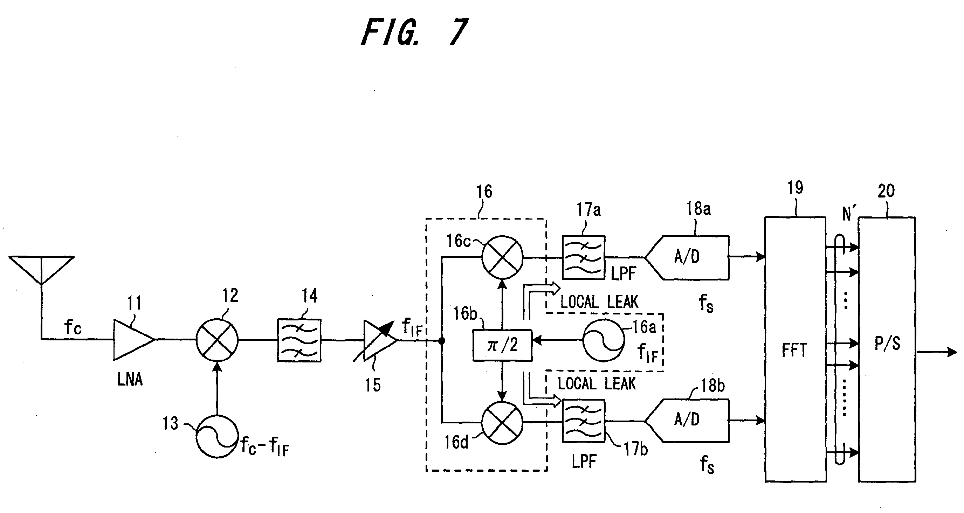

In the IFFT 3, one of the main reasons the subcarrier $f_0$ corresponding to the direct current component is not used is to prevent the local leak that occurs in frequency conversion which uses analog MIX from interfering with the subcarrier $f_0$. Likewise, the reason subcarriers near -fs/2 and +fs/2 are not used is because if they were used, the low-pass filters 5a and 5b would require a steep slope characteristic. In other words, in the OFDM transmission, before up-conversion of the signal frequency of the baseband signal, the output signals of DA converters 4a and 4b are input to the filters 5a and 5b so as to separate these baseband signals. However, if subcarriers near -fs/2 and +fs/2 are used, the frequency components of the output signals of DA converters become continuous, separation of the baseband signal becomes difficult and filters with a steep slope characteristic become necessary. Fig. 7 shows a configuration of an OFDM receiver comprising a heterodyne receiver configuration. A low-noise amplifier 11 amplifies the RF signal of frequency fc received by the antenna. A mixer 12 generates an intermediate frequency signal of frequency $f_{IF}$, by mixing a local signal (local oscillation signal) generated from a local oscillator 13 and having a frequency of (fc - $f_{IF}$) with the RF signal. An IF filter 14 passes the signal component of the intermediate frequency band, and a variable gain amplifier 15 amplifies the intermediate frequency signal and inputs it to an quadrature demodulator 16.

In the quadrature demodulator 16, a local oscillator 16a generates a local signal of the same frequency as the intermediate frequency $f_{IF}$, a phase shifter 16b inputs a local cosine wave and sine wave, the phases of which differ by 90°, to multipliers (mixers) 16c and 16d. Each of the mixers 16c and 16d, demodulates the complex signal of the baseband (real number part and imaginary number part) by multiplying the intermediate frequency signal by the cosine wave and sine wave, and inputs the results of the demodulation to low-pass filters 17a and 17b for erasing aliasing distortion. The low-pass filters 17a and 17b basically pass the baseband signals (main signals) and input them to AD converters 18a and 18b. The AD converters 18a and 18b sample each component of the baseband complex signal respectively at the frequency fs and input them to an FFT part 19 of size N. The FFT part 19 performs FFT processing using N complex signals and outputs N' subcarrier signal components. A P/S converter 20 converts the N' subcarrier signal components into serial complex data and inputs the data into a baseband processor not shown in the figure.

In the mixers 16c and 16d of the quadrature demodulator 16, there is a limit to the isolation amount and small amount of the local signal leaks into the main signal component. The low-pass filters 17a and 17b are necessary to eliminate the local leak components. By the way, in the case of handling broadband signals, there is a limit as to band ratio in configuring the IF filter 14, and it is necessary to increase the intermediate frequency $f_{IF}$. The "band ratio" is the ratio of bandwidth to the central frequency and, for performance reasons, it is necessary to make the band ratio less than a specified value.

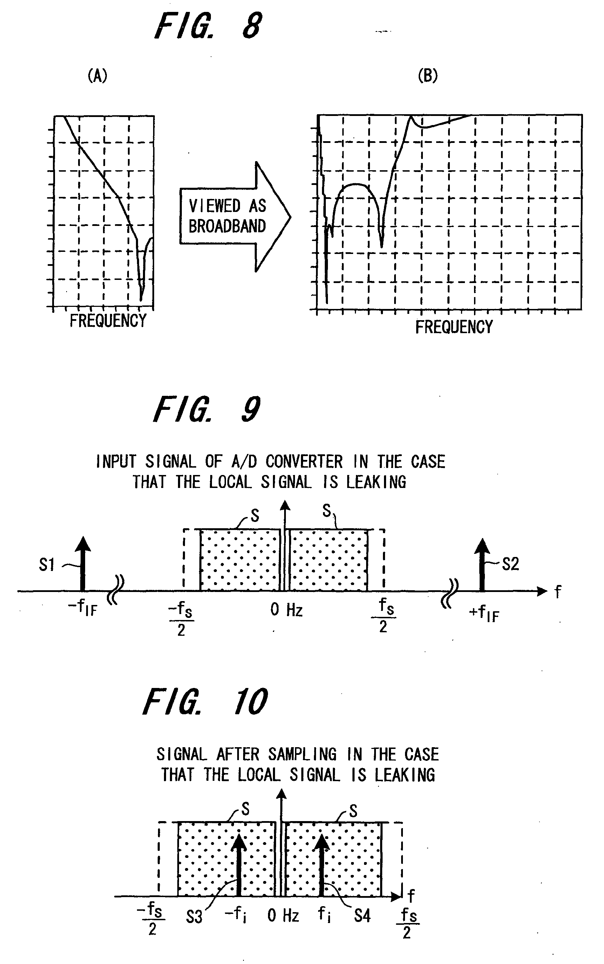

On the other hand, the low-pass filters 17a and 17b cannot block up to high bands. This is because, while the chip components which constitute the low-pass filter operate normally when the frequency is low, as the frequency rises they show characteristics different from the pure R, L, and C due to parasitic components. For example, even if a filter composed of coil L and condenser C, at high frequency the coil L operates as a capacitor and deteriorates characteristic of the filter. Fig. 8 shows an example of the frequency characteristic in the case where a low-pass filter is composed of chip components. It is clear that, in the region where the frequency is low, as in (A), the low-pass filter shows exactly a low-pass characteristic, but its characteristic in the region where the frequency is sufficiently high deteriorates as shown in (B) and it does not function adequately as a correct low-pass filter. In this way, a low-pass filter composed of low-cost chip components cannot block the high frequency components.

For this reason, in the past there has been the problem that if the intermediate frequency $f_{IF}$ became high, a low-pass filter composed of low-cost chip components could not be used, and instead it was necessary to use a special-purpose filter, such as a high-priced dielectric filter.

Also, in the past, there was the problem that, if a low-pass filter was not configured precisely, the local leak component of the intermediate frequency would be under-sampled by the AD converters 18a and 18b and this would be overlaid on the main signal spectrum as an image spectrum, and the reception quality of the specified subcarrier component would degrade.

Fig. 9 and Fig. 10 are drawings which explain this problem. Fig. 9 is the spectrum of the signal input to AD converters 18a and 18b when the local signal is leaking from the low-pass filters 17a and 17b. In Fig. 9, S is the spectrum of the main signal, S1 and S2 are the spectrums of the local leak component. The local frequency (intermediate frequency) $f_{IF}$ is a frequency far higher than the sampling frequency fs. If a leak signal having this intermediate frequency $f_{IF}$ is sampled at a frequency fs which is lower than that intermediate frequency (this is called "under-sampling"), the spectrum of the leak signal overlies on the main signal spectrum S as the image spectrums S3 and S4, as shown in Fig. 10. Here, if the frequency remainder obtained by dividing intermediate frequency $f_{IF}$ by sampling frequency fs is denoted as fi', the frequency fi of the image spectrums S3 and S4 is given as follows: if fi' is equal to or smaller than fs/2, fi = fi' , while if fi' is larger than fs/2, fi = fs - fi'. As a result, the reception quality of the subcarrier components of the main signal degrades at the frequencies -fi and fi.

<u>SUMMARY OF THE INVENTION</u>

With the foregoing in view, an object of the present invention is to prevent degradation of reception quality of the main signal by adapting a predetermined frequency as an intermediate frequency.

A further object of the present invention is to prevent degradation of the reception quality of the main signal even if the low-pass filter is composed of a low-cost L and C configuration.

A further object of the present invention is to prevent degradation of the reception quality of the main signal even if an intermediate frequency local signal leaks from the low-pass filter.

The present invention achieves the above objects by an OFDM wireless receiver comprising an intermediate frequency signal generator for generating an intermediate frequency signal in such a way that the spectrum when the intermediate frequency signal is under-sampled at a sampling frequency appears in a subcarrier band not used in OFDM transmission. The above-mentioned intermediate frequency signal generator determines the intermediate frequency in such a way that the remainder obtained by dividing the intermediate frequency by the sampling frequency is a frequency within a subcarrier band not used in OFDM transmission. Alternatively, the above-mentioned intermediate frequency signal generator determines the intermediate frequency in such a way that the intermediate frequency is a multiple of the sampling frequency.

Further, the OFDM wireless receiver, in addition to the above-mentioned intermediate frequency signal generator, comprises an quadrature demodulator for performing quadrature demodulation processing on the intermediate frequency signal and demodulating the baseband signal, a low-pass filter for cutting a high frequency component of the signal outputted from that quadrature demodulator, and an AD converter for sampling the output signal of that low-pass filter and converting it to a digital signal, wherein the intermediate frequency signal generator matches the local oscillation frequency of the quadrature demodulator to the intermediate frequency.

The present invention achieves the above object by an OFDM wireless receiver comprising a heterodyne receiver for demodulating a baseband signal from an intermediate frequency signal, a low-pass filter for cutting a high frequency component of the signal outputted from the heterodyne receiver, an AD converter for sampling the output signal of the low-pass filter at a sampling frequency and converting the sampled signal to a digital signal, a Fourier transformer for performing a Fourier transform on the digital signal obtained by the AD converter, and an intermediate frequency signal generator for generating the intermediate frequency signal in such a way that the spectrum when the intermediate frequency signal inputted to the above-mentioned AD converter is under-sampled appears in a subcarrier band not used in OFDM transmission.

The above-mentioned intermediate frequency signal generator determines the intermediate frequency so that the frequency of the remainder obtained by dividing the intermediate frequency by the sampling frequency is within a subcarrier band not used in the above-mentioned OFDM transmission. Alternatively, the above-mentioned intermediate frequency signal generator determines that intermediate frequency so that the intermediate frequency is a multiple of the sampling frequency.

According to the present invention, because the intermediate frequency signal is generated in such a way that the spectrum when the intermediate frequency signal is under-sampled appears in a subcarrier band not used in OFDM transmission, the reception quality of the main signal does not degrade even if an intermediate frequency local signal leaks from the low-pass filter.

Other features and advantages of the present invention will be apparent from the following descriptions taken in conjunction with the accompanying drawings.

BRIEF DESCRIPTION OF THE DRAWINGS

Fig. 1 is a block diagram of an OFDM receiver according to the present invention;
Fig. 2 is an explanatory drawing of the first intermediate frequency determining method of the intermediate frequency determining part;
Fig. 3 is an explanatory drawing of the second intermediate frequency determining method of the intermediate frequency determining part;
Fig. 4 is a configuration of a conventional OFDM transmitter;
Fig. 5 is a diagram for explaining OFDM size and the subcarriers which are not used during OFDM transmission;
Fig. 6 is a frequency spectrum in a case where subcarriers have been selected as shown in Fig. 5;
Fig. 7 is a an OFDM receiver comprising a conventional heterodyne receiving configuration;
Fig. 8 is an example of the frequency characteristics in the case where a low-pass filter is composed of chip components;
Fig. 9 is a diagram for explaining the conventional problems and is the spectrum of the input signal of the AD converter when the local signal leaks from the low-pass filter; and
Fig. 10 is an explanatory diagram for the case that image spectrums S3 and S4 when a leak signal having the intermediate frequency is under-sampled overlies on the main signal spectrum S.

DESCRIPTION OF THE PREFERRED EMBODIMENTS

(A) Outline of the Present Invention

In an OFDM receiver, a heterodyne receiving portion demodulates a baseband signal from an intermediate frequency signal. A low-pass filter cuts the high frequency component of the signal outputted from that heterodyne receiver. An AD converter samples the output signal of that low-pass filter and converts it to a digital signal. A Fourier transformer performs a Fourier transform on the digital signal obtained by the AD converter. An intermediate frequency signal generator generates the intermediate frequency signal so that the spectrum of the signal obtained by under-sampling the intermediate frequency signal at the AD converter, appears in a subcarrier band which is not used in OFDM transmission. Specifically, the intermediate frequency signal generator determines the intermediate frequency so that the frequency of the remainder obtained by dividing the intermediate frequency by the sampling frequency, becomes within a sampling band not used in OFDM transmission. Alternatively, the intermediate frequency generator determines the intermediate frequency so that the intermediate frequency becomes a multiple of the sampling frequency.

(B) Configuration

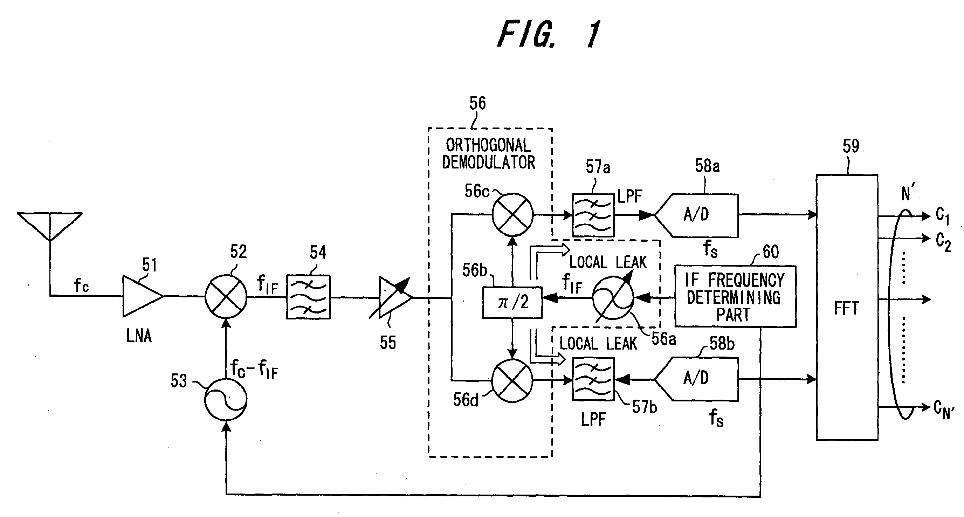

Fig. 1 is a block diagram of an OFDM receiver according to the present invention.

A low noise amplifier (LNA) 51 amplifies an RF signal of frequency fc received by an antenna. A mixer 52 generates an intermediate frequency signal of frequency $f_{IF}$ by mixing a local signal of frequency (fc - $f_{IF}$), which is generated from a local oscillator 53, with the RF signal, and an IF filter 54 passes the intermediate frequency band signal component. A variable gain amplifier 55 amplifies the intermediate frequency signal and inputs it to an quadrature demodulator 56.

In the quadrature demodulator 56, a local oscillator 56a generates a local signal (local oscillation signal) of the same frequency as the intermediate frequency $f_{IF}$, a phase shifter 56b inputs a local cosine wave and sine wave, the phases of which differ by 90°, to multipliers (mixers) 56c and 56d. Each of the mixers 56c and 56d demodulates the complex signal of the baseband(real number part and imaginary number part) by multiplying the intermediate frequency signal by the cosine wave and sine wave and inputs the results of the demodulation to low-pass filters 57a and 57b. The low-pass filters 57a and 57b pass the baseband signals (main signals) and input them to AD converters 58a and 58b. The AD converters 58a and 58b sample each component of the baseband complex signal respectively at the frequency fs, convert them to digital signals, and input them to an FFT part 59 of size N. The FFT part 59 performs FFT processing on N complex signals and outputs N' subcarrier signal components $C_1$ through $C_{N'}$. A P/S converter (not shown in the figure) converts the N' subcarrier signal components $C_1$ through $C_{N'}$ into serial complex data and inputs the data into a baseband processor (not shown in the figure).

An intermediate frequency determining part 60, in order to control the intermediate frequency $f_{IF}$ so that the spectrum when the intermediate frequency signal inputted to the AD converters 58a and 58b is under-sampled therein, appears in a subcarrier band not used in OFDM transmission, instructs the local oscillator 53 to oscillate at a frequency of (fc - $f_{IF}$) and also instructs the local oscillator 56a to oscillate at a frequency of $f_{IF}$. By this means, the local oscillator 53 generates a local signal with a frequency of (fc - $f_{IF}$) and the local oscillator 56a generates a local signal with a frequency of $f_{IF}$.

In the above manner, the intermediate frequency determining part 60, by controlling the local oscillator 53, generates an intermediate frequency signal of intermediate frequency $f_{IF}$ from the mixer 52 and also, by controlling the local oscillator 56a, generates a local signal of intermediate frequency $f_{IF}$. Further, a control of this intermediate frequency signal generation may also be possible without using the intermediate frequency determining part. That is, without using the intermediate frequency determining part 60, the local oscillator 53 is adjusted to generate in a fixed manner a local signal with a frequency of (fc - $f_{IF}$) and the local oscillator 56a adjusted to generate in a fixed manner a local signal with a frequency of **$f_{IF}$**. As a result, a configuration incorporating both the intermediate frequency determining part 60 and the local oscillator 53 (and also the mixer 52) is regarded as an intermediate frequency generating part for producing the intermediate frequency $f_{IF}$. Alternatively, the local oscillator 53 (and also the mixer 52) can be considered to be the intermediate frequency generating part.

(C) The First Intermediate Frequency Determining Method

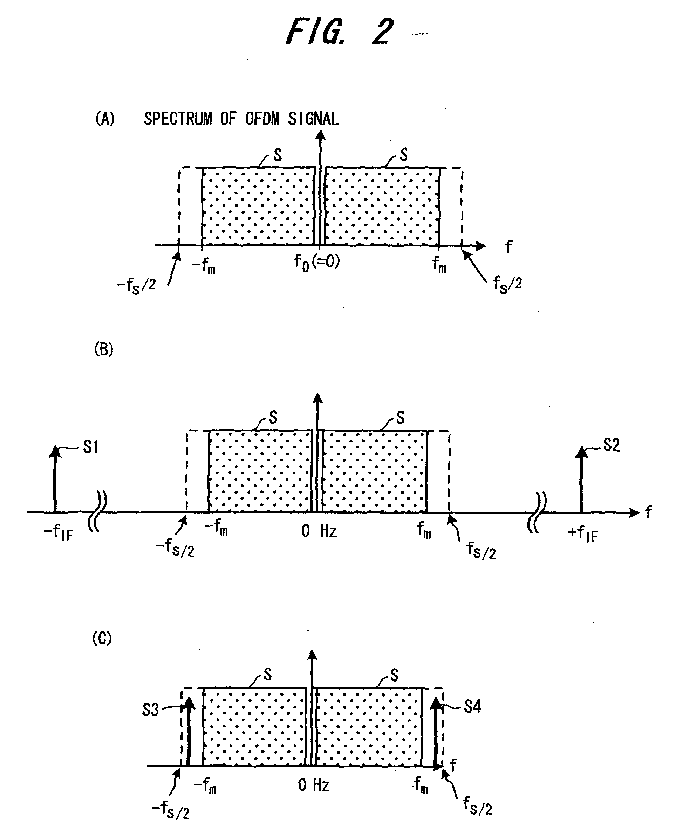

Fig. 2 is an explanatory drawing of the first intermediate frequency determining method by means of the intermediate frequency determining part 60. (A) shows the spectrum S of the OFDM signal (main signal) in a case where the sampling frequency is fs. In the OFDM transmission, since data is not transmitted using a subcarrier $f_0$ (=0), which corresponds to the direct current component subcarriers -fs/2 through -fm and fm through fs/2, the spectrum for these subcarriers becomes 0. (B) shows the spectrum of the signal inputted to the AD converters 58a and 58b when the local signal having a inermediated frequency $f_{IF}$ is leaking from the low-pass filters 57a and 57b. S is the spectrum of the main signal, and S1 and S2 are the spectrums of the local leak component. (C) shows the spectrum S of the OFDM signal and spectrums S3 and S4 in a case where the local signal having the intermediate frequency is under-sampled in the AD converters and the spectrums S3 and S4 of the under-sampled signal appear in the subcarrier bands -fs/2 to -fm and fm to fs/2 which are not used for OFDM transmission.

In order to produce the spectrums S3 and S4 as shown in(C), the intermediate frequency determining part 60 must determine the intermediate frequency $f_{IF}$ so that the remainder, when the intermediate frequency $f_{IF}$ is divided by the sampling frequency fs, is a frequency in the subcarrier bands -fs/2 to -fm and fm to fs/2 which are not used in OFDM transmission.

Mathematically, this means that the intermediate frequency $f_{IF}$ is determined so that the following expression is satisfied:

$$f_m < f_{IF} \ (mod \ f_s) < f_s - f_m \quad (1)$$

In the above expression, $f_{IF} \ (mod \ f_s)$ is the remainder when $f_{IF}$ is divided by $f_s$.

To explain this with specific numerical values, if $f_s$ = *120MHz* and $f_m$ = *50MHz,* the conditional expression (1) becomes as follows.

$$50MHz < f_{IF} \ (mod \ 120MHz) < 70MHz \quad (1)'$$

Consequently, if a selection is made that $f_{IF}$ = *1375MHz,* it becomes:

$$f_{IF} \ (mod \ 120MHz) \ = \ 1375MHz \ (mod \ 120MHz)$$

$$= \ (120 \times 11 \ + \ 55MHz) \ (mod \ 120MHz)$$

$$= \ 55MHz$$

and expression (1)' is satisfied.

(D) The Second Intermediate Frequency Determining Method

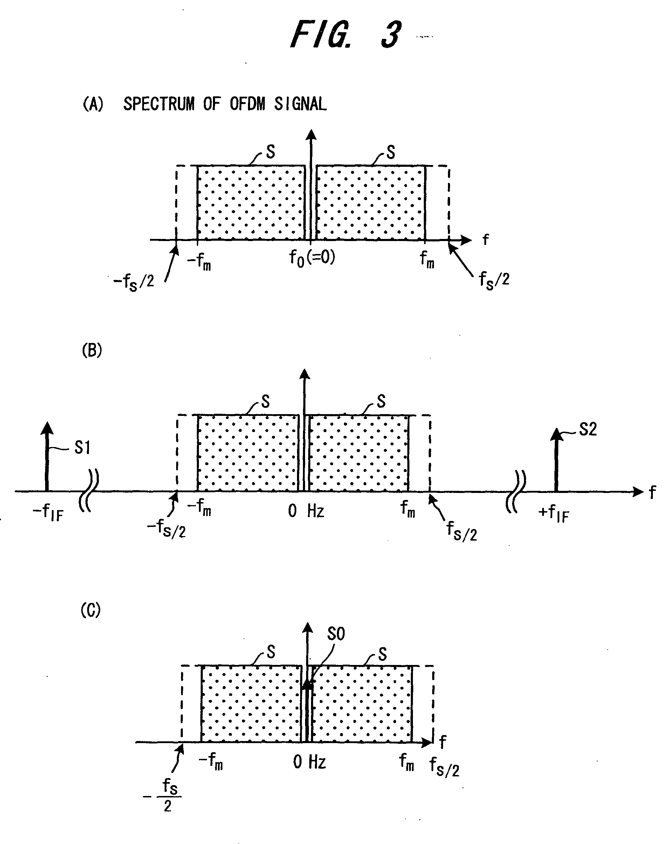

Fig. 3 is an explanatory drawing of the second intermediate frequency determining method by means of the intermediate frequency determining part 60. (A) shows the spectrum S of the OFDM signal (main signal) in a case where the sampling frequency is fs. In the OFDM transmission, since data is not transmitted using a subcarrier $f_0$ (=0) which corresponds to the direct current component subcarriers -fs/2 through -fm and subcarriers fm through fs/2, the spectrum for these subcarriers becomes 0. (B) shows the spectrum of the signal inputted to the AD converters 58a and 58b when the local signal having a intermediate frequency $f_{IF}$ is leaking from the low-pass filters 57a and 57b, S is the spectrum of the main signal, and S1 and S2 are the spectrums of the local leak component. (C) shows the spectrum S of the OFDM signal and a spectrum so in a case where the local signal having the intermediate frequency is under-sampled in the AD converters and the spectrum S0 appears at the frequency $f_0$ (= 0) which corresponds to the direct current portion which is not used in OFDM transmission.

In order to produce the spectrum so as shown In (C), the intermediate frequency determining part 60 must determine the intermediate frequency $f_{IF}$ so that it is a multiple of the sampling frequency fs. In other words, the intermediate frequency determining part 60 determines the intermediate frequency $f_{IF}$ so that the remainder, when the intermediate frequency is divided by the sampling frequency fs, is 0. Mathematically, this means that the intermediate frequency $f_{IF}$ is determined so that the following expression is satisfied:

$$f_{IF} \ (mod \ f_s) \ = \ 0 \quad (2)$$

In the above expression, $f_{IF} \ (mod \ f_s)$ is the remainder when $f_{IF}$ is divided by $f_s$.
To explain this with specific numerical values, if $f_s$ = *120MHz* and $f_m$ = *50MHz*, the conditional expression (2) becomes as follows.

$$f_{IF} \ (mod \ 120MHz) \ = \ 0 \ Hz \quad (2)'$$

Consequently, if a selection is made that $f_{IF}$ = *1320MHz,* it becomes:

$$f_{IF} \ (mod \ 120MHz) \ = \ 1320MHz \ (mod \ 120MHz)$$

$$= \ 120 \times 11MHz \ (mod \ 120MHz)$$

$$= \ 0 \ Hz$$

and expression (2)' is satisfied.

(E) Operation and Effect

If the intermediate frequency signal is generated with the intermediate frequency determined in the above manner, the spectrum when the intermediate frequency signal is under-sampled appears in a subcarrier band which is not used in OFDM transmission. As a result, degradation of the reception quality of the main signal can be prevented even though a local signal of the intermediate frequency leaks from the low pass filter. As a result of this, a special filter such as a high-priced dielectric filter need not be used, and degradation of reception quality of the main signal can be prevented even if the low-pass filter is a low-cost one composed of L and C. Also, as a result of this, it is possible to achieve lower cost, smaller volume, and a reduction in circuit scale.

As many apparently widely different embodiments of the present invention can be made without departing from the spirit and scope thereof, it is to be understood that the invention is not limited to the specific embodiments thereof except as defined in the appended claims.

## Claims

1.  An OFDM wireless receiver which converts a received signal into an intermediate frequency signal and demodulates a baseband signal from that intermediate frequency signal, comprising:

    an intermediate frequency signal generator for generating an intermediate frequency signal so that the spectrum when the intermediate frequency signal is under-sampled at a sampling frequency, appears in a subcarrier band not used in OFDM transmission.

2.  The OFDM wireless receiver according to claim 1 wherein said intermediate frequency signal generator determines the intermediate frequency so that the remainder obtained by dividing the intermediate frequency by the sampling frequency is a frequency within a subcarrier band not used in said OFDM transmission.

3.  The OFDM wireless receiver according to claim 1 wherein said intermediate frequency signal generator determines the intermediate frequency so that the intermediate frequency is a multiple of the sampling frequency.

4.  The OFDM wireless receiver according to claim 1 comprising:

    an quadrature demodulator for performing quadrature demodulation processing on said intermediate frequency signal and demodulating the baseband signal;
    a low-pass filter for cutting a high frequency component of the signal outputted from said quadrature demodulator; and
    an AD converter for sampling the output signal of the low-pass filter and converting the sampled signal to a digital signal;

    wherein said intermediate frequency signal generator matches a local oscillation frequency of the quadrature demodulator to the intermediate frequency.

5.  An OFDM wireless receiver comprising:

    a heterodyne receiver for demodulating a baseband signal from an intermediate frequency signal;
    a low-pass filter for cutting a high frequency component of the signal outputted from the heterodyne receiver;
    an AD converter for sampling the output signal of the low-pass filter at a sampling frequency and converting the sampled signal to a digital signal;
    a Fourier transformer for performing a Fourier transform on the digital signal obtained by the AD converter; and
    an intermediate frequency signal generator for generating the intermediate frequency signal so that the spectrum when the intermediate frequency signal inputted to said AD converter is under-sampled appears in a subcarrier band not used in OFDM transmission.

6.  The OFDM wireless receiver according to claim 5 wherein said intermediate frequency signal generator determines the intermediate frequency so that the remainder obtained by dividing the intermediate frequency by the sampling frequency is a frequency within a subcarrier band not used in said OFDM transmission.

7. The OFDM wireless receiver according to claim 5 wherein said intermediate frequency signal generator determines the intermediate frequency so that the intermediate frequency is a multiple of the sampling frequency.

8. The OFDM wireless receiver according to claim 5, wherein said heterodyne receiver comprising:

a frequency converter for converting the received high frequency signal into an intermediate frequency signal; and
an quadrature demodulator for performing quadrature demodulation processing on the intermediate frequency signal and demodulating the baseband signal; and
said intermediate frequency signal generator matches the local oscillation frequency of that quadrature demodulator to said intermediate frequency.

# FIG. 1

# FIG. 2

(A)   SPECTRUM OF OFDM SIGNAL

(B)

(C)

# FIG. 3

(A) SPECTRUM OF OFDM SIGNAL

(B)

(C)

# FIG. 4

## FIG. 5

0 IS INPUTTED

FOR INPUT TERMINALS OTHER THAN
THOSE WITH 0 INPUT, INPUT
MEANINGFUL DATA FROM S/P CONVERTER

## FIG. 6

FIG. 7

20  P/S

N'

19  FFT

18a  A/D  $f_s$

18b  A/D  $f_s$

17a  LPF

17b  LPF

LOCAL LEAK

LOCAL LEAK

16a  $f_{IF}$

16  
16c  
16b  $\pi/2$  
16d

$f_{IF}$

15

14

12

13  $f_c - f_{IF}$

11  LNA

$f_c$

# FIG. 8

(A)

(B)

FREQUENCY

VIEWED AS
BROADBAND

FREQUENCY

# FIG. 9

INPUT SIGNAL OF A/D CONVERTER IN THE CASE
THAT THE LOCAL SIGNAL IS LEAKING

$S$

$S$

$S1$

$S2$

$-f_{IF}$

$\dfrac{-f_s}{2}$

0 Hz

$\dfrac{f_s}{2}$

$+f_{IF}$

$f$

# FIG. 10

SIGNAL AFTER SAMPLING IN THE CASE
THAT THE LOCAL SIGNAL IS LEAKING

$S$

$S$

$\dfrac{-f_s}{2}$

$S3$

$-f_i$

0 Hz

$f_i$

$S4$

$\dfrac{f_s}{2}$

$f$